# FASCICULE DE BREVET EUROPEEN

(11) **EP 2 912 082 B1**
(45) Date de publication et mention de la délivrance du brevet: **04.08.2021**
(21) Numéro de dépôt: 13779199.2
(22) Date de dépôt: 16.10.2013
(51) Int. Cl.: C08G 18/50, C08G 18/64, C09D 175/02, C08G 18/38, C09J 175/02

(54) **POLYUREE UTILISABLE NOTAMMENT COMME PRIMAIRE D'ADHESION POUR LE COLLAGE DE METAL A DU CAOUTCHOUC**
POLYHARNSTOFF, INSBESONDERE VERWENDBAR ALS HAFTGRUNDIERUNG ZUM KLEBEN VON METALL AN KAUTSCHUK
POLYUREA THAT IS PARTICULARLY USEFUL AS AN ADHESION PRIMER FOR ADHERING METAL TO RUBBER

(30) Priorité: 24.10.2012 FR 1260100; 26.04.2013 FR 1353815
(43) Date de publication de la demande: 02.09.2015
(73) Titulaire: Compagnie Générale des Etablissements Michelin, 63000 Clermont-Ferrand (FR)
(72) Inventeur: FEDURCO, Milan, F-63040 Clermont-Ferrand Cedex 9 (FR); RIBEZZO, Marco, F-63040 Clermont-Ferrand Cedex 9 (FR); DELFINO, Antonio, F-63040 Clermont-Ferrand Cedex 9 (FR)
(74) Mandataire: Desbordes, Guillaume
(86) Numéro de dépôt international: PCT/EP2013/071579
(87) Numéro de publication internationale: WO 2014/063963

(56) Documents cités:
- US-A1- 2010 021 676
- US-B2- 6 723 821
- None

## Description

### 1. DOMAINE DE L'INVENTION

La présente invention est relative aux polymères à unités urée, ou polyurées, utilisables notamment dans les systèmes adhésifs destinés en particulier au collage de métal ou de verre à du caoutchouc.

Elle est plus particulièrement relative aux polyurées utilisables comme primaires d'adhésion dans les composites métal / caoutchouc destinés à la fabrication d'articles en caoutchouc tels que des pneumatiques.

### 2. ETAT DE LA TECHNIQUE

Les composites métal / caoutchouc, en particulier pour pneumatiques, sont bien connus. Ils sont généralement constitués d'une matrice en caoutchouc insaturé généralement diénique, réticulable au soufre, comportant des éléments de renforcement (ou « renforts ») métalliques tels que des fils, films ou câbles en acier au carbone.

Soumis à des contraintes très importantes lors du roulage des pneumatiques, notamment à des compressions, flexions ou variations de courbure répétées, ces composites doivent de manière connue satisfaire à un grand nombre de critères techniques, parfois contradictoires, tels qu'uniformité, flexibilité, endurance en flexion et en compression, résistance à la traction, à l'usure et à la corrosion, et maintenir ces performances à un niveau très élevé aussi longtemps que possible.

On comprend aisément que l'interphase adhésive entre caoutchouc et renforts joue un rôle prépondérant dans la pérennité de ces performances. Le procédé traditionnel pour relier les compositions de caoutchouc à de l'acier au carbone consiste à revêtir la surface de l'acier avec du laiton (alliage cuivre-zinc), la liaison entre l'acier et la matrice de caoutchouc étant assurée par sulfuration du laiton lors de la vulcanisation ou cuisson du caoutchouc. Pour améliorer l'adhésion, on utilise en outre généralement, dans ces compositions de caoutchouc, des sels organiques ou des complexes de métal tels que des sels de cobalt, en tant qu'additifs promoteurs d'adhésion.

Or, on sait que l'adhésion entre l'acier au carbone et la matrice de caoutchouc est susceptible de s'affaiblir au cours du temps, du fait de l'évolution progressive des sulfures formés sous l'effet des différentes sollicitations rencontrées, notamment mécaniques et/ou thermiques, le processus de dégradation ci-dessus pouvant être accéléré en présence d'humidité.

D'autre part, l'utilisation de sels de cobalt rend les compositions de caoutchouc plus sensibles à l'oxydation et au vieillissement, et en augmente significativement le coût, sans compter qu'il est souhaitable de supprimer à terme l'emploi de tels sels de cobalt dans les compositions de caoutchouc, en raison de l'évolution récente de la réglementation européenne sur ce type de sels métalliques. Le document US 2010/021676 concerne des compositions de polyurée utilisées pour le collage de caoutchouc. Les exemples A1-A4 décrivent la réaction entre différentes polyamines comprenant Ethacure 300 et un polyisocyanate.

Pour toutes les raisons exposées ci-dessus, les fabricants de composites métal / caoutchouc, en particulier les manufacturiers de pneumatiques sont à la recherche de solutions adhésives nouvelles pour faire coller les renforts métalliques aux compositions de caoutchouc, tout en palliant, au moins en partie, les inconvénients précités.

### 3. BREVE DESCRIPTION DE L'INVENTION

Or, au cours de leurs recherches, les Demanderesses ont trouvé un polymère nouveau du type polyurée, de formule spécifique, qui répond à un tel objectif.

En conséquence, l'invention concerne une polyurée comportant au moins des unités de base urée de formule -NH-CO-NH- et des unités additionnelles, caractérisée en ce que ces unités additionnelles sont des unités du type polyamines polyaromatiques soufrées comportant au moins un motif répondant à la formule (I) :

(I) -HN-Ar₁-NH-CH₂-CH(OH)-(CH₂)ₘ-O-Z₁-O-(CH₂)ₘ-CH(OH)-CH₂-[X]ₙ-HN-Ar₂-NH-

dans laquelle X représente l'enchaînement :

-HN-Ar₃₋NH-(CH₂)-CH(OH)-(CH₂)ₘ-O-Z₂-O-(CH₂)ₘ-CH(OH)-(CH₂)-

et dans laquelle:
- le symbole « n » représente un nombre entier égal à zéro ou différent de zéro ;
- les symboles « m », identiques ou différents, représentent un nombre entier compris dans un domaine de 1 à 10 ;
- les symboles Z₁ et Z₂, identiques ou différents, représentent un groupement de liaison divalent comportant de 1 à 30 atomes de carbone, de préférence un groupement aliphatique comportant 2 à 20 atomes de carbone ou cycloaliphatique comportant 3 à 20 atomes de carbone ;
- Ar₁, Ar₂ et Ar₃, identiques ou différents, représentent un groupe phénylène, un au moins de ces groupes phénylène étant porteur de un, deux, trois ou quatre groupements de formule -Sₓ-R dans laquelle « x » est un entier de 1 à 8 et R représente l'hydrogène ou un groupe hydrocarboné, pouvant comporter un hétéroatome, comportant de 1 à 10 atomes de carbone , de préférence un alkyle ayant de préférence 1 à 5 atomes de carbone.

Les renforts métalliques ainsi revêtus du polymère selon l'invention, en tant que primaire d'adhésion, présentent comme avantage majeur celui de pouvoir ensuite être collés à des matrices de caoutchouc insaturé en utilisant de simples colles textiles telles que des colles « RFL » (résorcinol-formaldéhyde-latex) ou autres compositions adhésives équivalentes, ou encore directement (c'est-à-dire sans emploi de telles colles) à ces matrices de caoutchouc insaturé lorsque ces dernières contiennent par exemple des élastomères insaturés fonctionnalisés appropriés tels que des élastomères époxydés.

Grâce à l'invention, peuvent être utilisés des renforts métalliques revêtus ou non revêtus de couches métalliques adhésives telles que du laiton, ainsi que des matrices de caoutchouc environnantes dépourvues de sels métalliques, en particulier de sels de cobalt.

L'invention concerne également l'utilisation du polymère selon l'invention comme primaire d'adhésion pour le collage de tout substrat, notamment de métal tel que fer ou zinc, ou encore de verre, à un caoutchouc insaturé tel que notamment un élastomère diénique.

Le polymère de l'invention ayant révélé par ailleurs des propriétés hydrophobes, le revêtement proposé présente des propriétés anti-corrosion efficaces. Ainsi, l'invention concerne également l'utilisation de ce polymère comme revêtement de protection anticorrosion d'un substrat en métal ou d'un substrat dont la surface est au moins en partie métallique, en particulier dans toute application où ledit substrat métallique est susceptible d'être utilisé dans un environnement humide.

Enfin, l'invention concerne également en soi tout substrat, notamment de métal ou de verre (ou tout au moins dont la surface comporte du métal ou du verre), qui est revêtu, au moins en partie, d'une polyurée selon l'invention.

L'invention concerne en particulier tout renfort métallique revêtu d'une polyurée selon l'invention. Elle concerne en particulier tout fil, câble, film ou plaque métallique dont au moins une partie de la surface est en acier laitonné, caractérisé en ce que ledit acier laitonné est lui-même revêtu d'une polyurée conforme à l'invention.

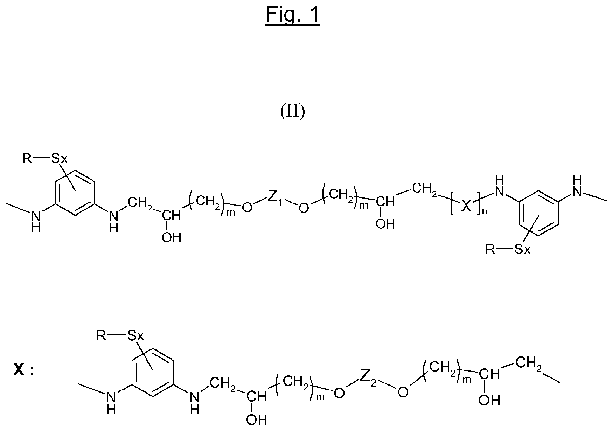

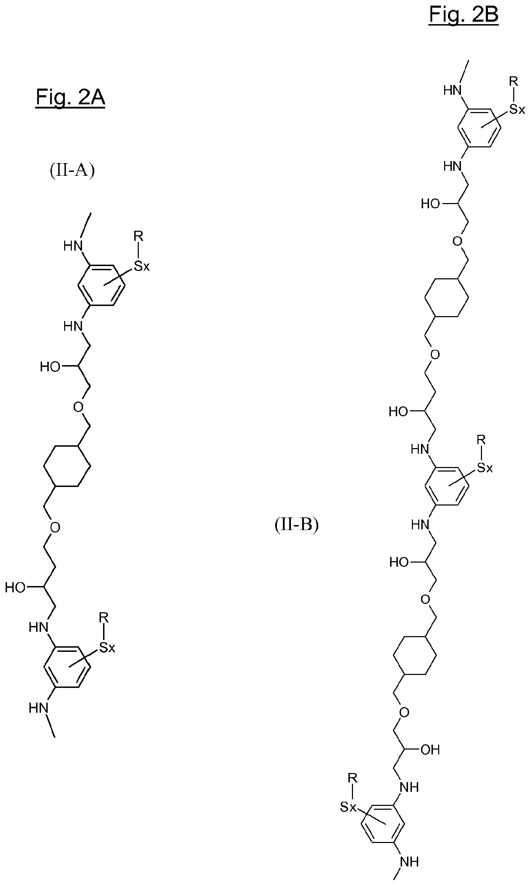

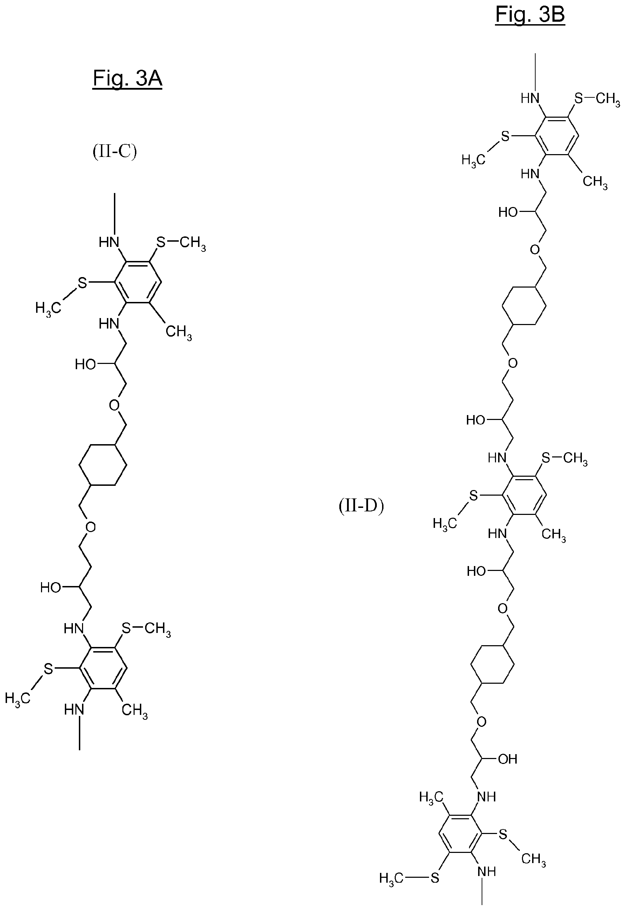

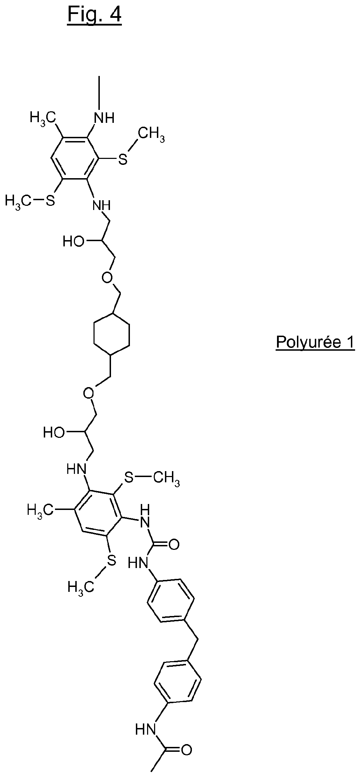

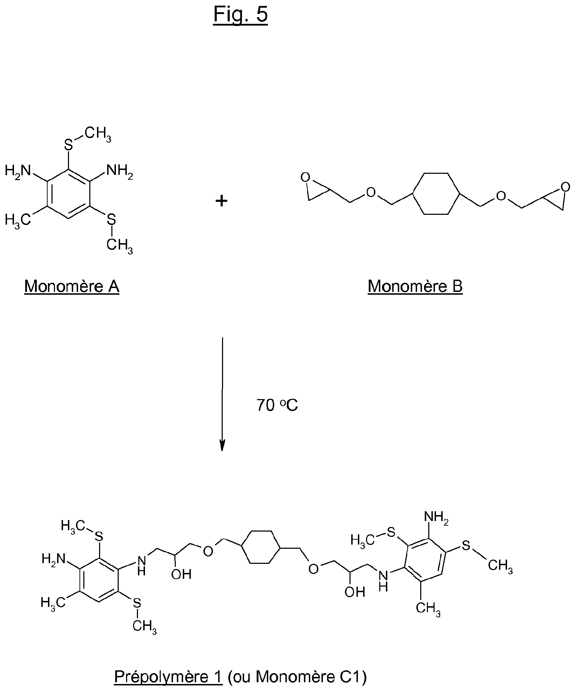

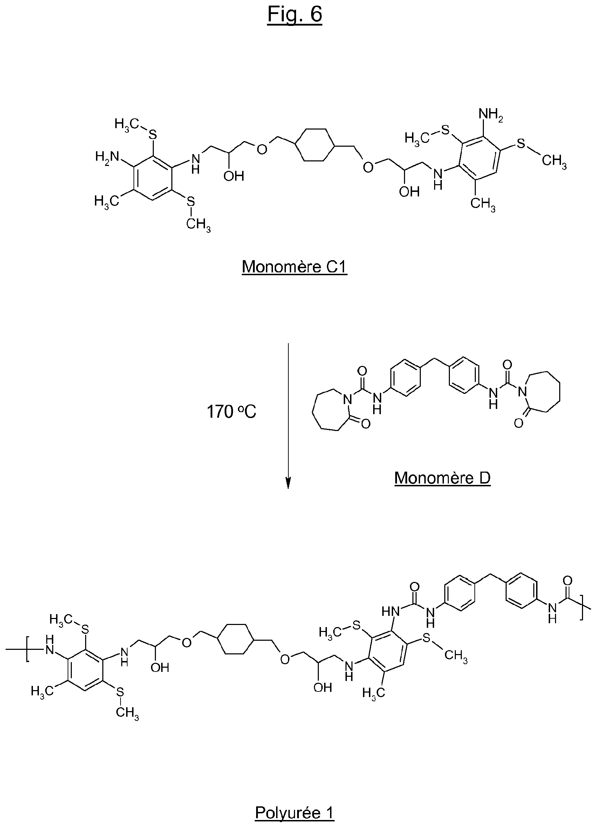

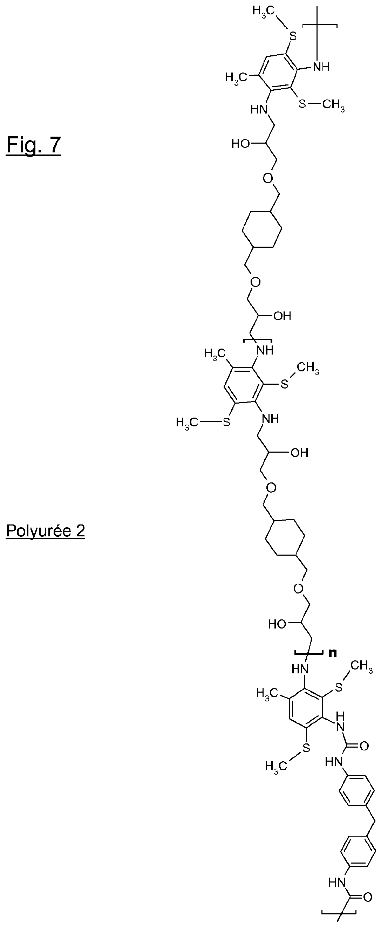

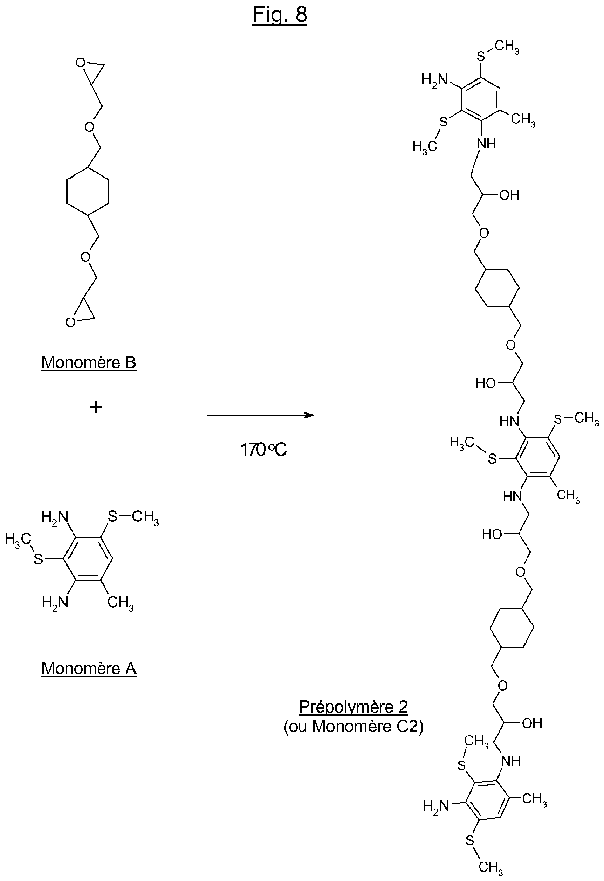

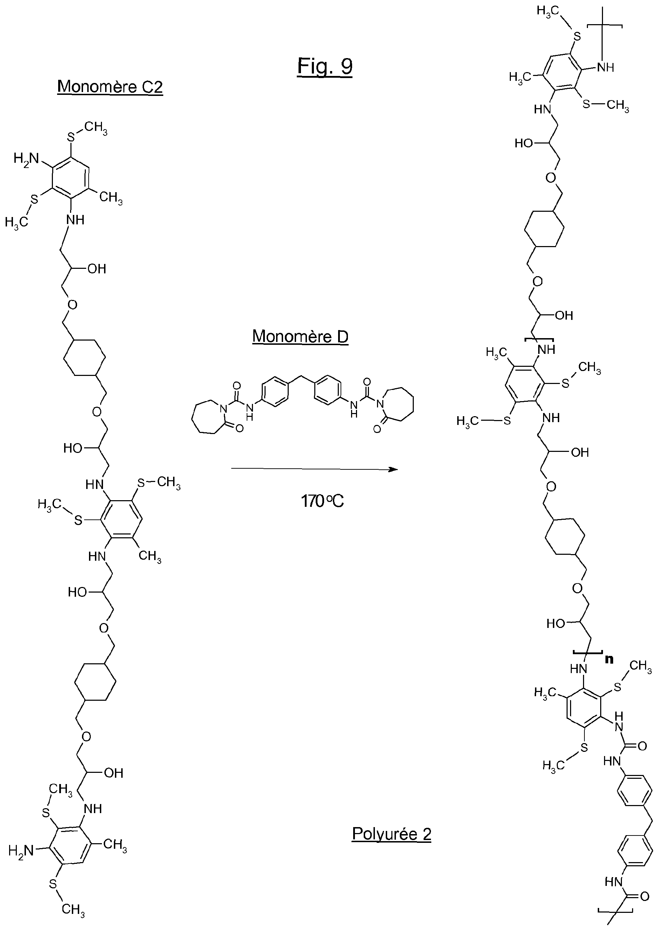

L'invention ainsi que ses avantages seront aisément compris à la lumière de la description détaillée et des exemples de réalisation qui suivent, ainsi que des figures relatives à ces exemples qui représentent ou schématisent :
- un exemple d'unités structurelles polyamines polyaromatiques soufrées dont le motif de formule générale (I) répond à la formule particulière (II) dans laquelle, sur chaque groupe phénylène, deux groupes amino (NH) sont en position méta l'un par rapport à l'autre (Fig. 1) ;
- deux exemples d'unités structurelles polyamines polyaromatiques soufrées dont le motif de formule particulière (II) répond à la formule plus particulière (II-A) ou (II-B) dans lesquelles « m » est égal à 1 pour chaque groupe (CH₂)ₘ, Z₁ et le cas échéant Z₂ représentent le 1,4-diméthylène cyclohexane, et « n » est égal à 0 (II-A) ou à 1 (II-B), respectivement (Fig. 2A et 2B) ;
- deux exemples d'unités structurelles polyamines polyaromatiques soufrées dont les motifs de formules particulières (II-A) ou (II-B) répondent respectivement aux formules plus particulières (II-C) et (II-D) dans lesquelles, en outre, chaque groupement phénylènediamino répond à la formule particulière (III-a) (Fig. 3A et 3B) ;
- un exemple de séquence (unité structurelle récurrente) d'un polymère conforme à l'invention (Polyurée 1), issu de la réaction d'un diisocyanate MDI (ou précurseur de MDI) et d'une polyamine (Prépolymère 1) (Fig. 4) ;
- un schéma de synthèse possible, à partir de deux Monomères A et B, d'une polyamine (Prépolymère 1, aussi appelé Monomère C1) servant à la préparation du polymère Polyurée 1 conforme à l'invention (Fig. 5) ;
- un schéma de synthèse possible du polymère Polyurée 1 conforme à l'invention à partir de la polyamine (Monomère C1) précédente et d'un diisocyanate (MDI) bloqué (dit Monomère D) (Fig. 6) ;
- un exemple de séquence (unité structurelle récurrente) d'un polymère conforme à l'invention (Polyurée 2), issu de la réaction d'un diisocyanate MDI (ou précurseur de MDI) et d'une polyamine (Prépolymère 2) (Fig. 7) ;
- un schéma de synthèse possible, à partir des deux Monomères A et B, d'une autre polyamine (Prépolymère 2, aussi appelé Monomère C2) servant à la préparation du polymère Polyurée 2 conforme à l'invention (Fig. 8) ;
- un schéma de synthèse possible du polymère Polyurée 2 conforme à l'invention à partir de la polyamine (Monomère C2) précédente et d'un diisocyanate (MDI) bloqué (Monomère D) (Fig. 9).

### 4. DESCRIPTION DETAILLEE DE L'INVENTION

On rappellera tout d'abord qu'une polyurée est un polymère comportant une pluralité de liaisons urée (-NH-CO-NH-) résultant de manière connue de la réaction d'addition d'une polyamine ayant au moins deux fonctions amine primaire sur un polyisocyanate (composé porteur d'au moins deux fonctions isocyanate -NCO), notamment sur un diisocyanate dans le cas d'une polyurée du type linéaire.

Le polymère polyurée de l'invention, comportant donc par définition des unités de base urée (-NH-CO-NH-), a pour caractéristique essentielle de comporter en outre des unités additionnelles du type polyamines polyaromatiques soufrées qui comportent chacune au moins un motif répondant à la formule (I) :

(I) -HN-Ar₁-NH-CH₂-CH(OH)-(CH₂)ₘ-O-Z₁-O-(CH₂)ₘ-CH(OH)-CH₂-[X]ₙ-HN-Ar₂-NH-

dans laquelle:
- X répond à la formule:

   -HN-Ar₃-NH-(CH₂)-CH(OH)-(CH₂)ₘ-O-Z₂-O-(CH₂)ₘ-CH(OH)-(CH₂)-
- « n » représente un nombre entier égal à zéro ou différent de zéro ;
- les symboles « m », identiques ou différents, représentent un nombre entier compris dans un domaine de 1 à 10 ;
- les symboles Z₁ et Z₂, identiques ou différents, représentent un groupement de liaison divalent comportant de 1 à 30 atomes de carbone ;
- Ar₁, Ar₂ et Ar₃, identiques ou différents, représentent un groupe phénylène, un au moins de ces groupes phénylène étant porteur de un, deux, trois ou quatre groupements de formule -Sₓ-R dans laquelle « x » est un entier de 1 à 8 et R représente l'hydrogène ou un groupe hydrocarboné, pouvant comporter un hétéroatome, comportant de 1 à 10 atomes de carbone.

Par polyurée doit donc être entendu ici tout homopolymère ou copolymère, notamment copolymère à blocs, comportant les unités structurelles à motif de formule (I) ci-dessus et des unités urée (-NH-CO-NH-).

Dans la formule (I) ci-dessus, « x » est un entier de 1 à 8, de préférence de 1 à 4, plus préférentiellement égal à 1 ou 2, plus particulièrement égal à 1.

R représente l'hydrogène ou un groupe hydrocarboné comportant de 1 à 10 atomes de carbone, substitué ou non substitué, pouvant comporter un hétéroatome tel que S, O ou N. De préférence, R est un groupe aliphatique, plus préférentiellement un groupe alkyle. Plus préférentiellement encore, R est un alkyle ayant de 1 à 5 atomes de carbone, cet alkyle pouvant être substitué ou non substitué ; plus particulièrement, R représente un méthyle ou un éthyle, encore plus particulièrement un méthyle.

Dans les cas particuliers où, dans le groupement -Sₓ-R du motif (I) ci-dessus, R représente l'hydrogène, l'homme du métier comprendra que, lors de la synthèse du prépolymère correspondant, par réaction d'une diamine de départ (par exemple monomère A ci-après) sur un composé diépoxy (par exemple Monomère B ci-après), le groupe thiol -SH pourra être protégé contre toute réaction parasite avec ce diépoxy, de manière connue, par un groupement bloquant approprié et connu de l'homme de l'art, par exemple tel que représenté dans les formules ci-dessous :

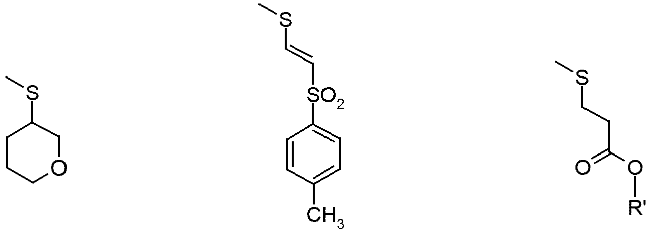

Selon un mode préférentiel de l'invention, chacun des groupes Ar₁, Ar₂ et Ar₃, identiques ou différents, est porteur de un, deux, trois ou quatre groupements de formule -Sₓ-R, en particulier de deux groupes -SR (x égal à 1) dans lesquels R est un alkyle ayant de 1 à 5 atomes de carbone, R étant plus particulièrement un méthyle ou un éthyle, encore plus particulièrement un méthyle.

Selon un mode de réalisation plus préférentiel, Ar₁, Ar₂ et Ar₃, identiques ou différents, sont chacun porteurs de deux groupes -Sₓ-R, en particulier de deux groupes -SR (x égal à 1) dans lesquels R est un alkyle ayant de 1 à 5 atomes de carbone, R étant plus particulièrement un méthyle ou un éthyle, encore plus particulièrement un méthyle. Plus préférentiellement encore, dans un tel cas, les deux groupes (-SR), en particulier (-SCH₃) sont en position méta (ou position -1,3) l'un par rapport à l'autre sur chaque groupe phénylène Ar.

Les nombres « m » peuvent être identiques ou différents d'un groupe (CH₂)ₘ à l'autre ; préférentiellement, chaque nombre « m » est égal à 1 ou 2, plus préférentiellement égal à 1.

Les symboles Z₁ et Z₂, identiques ou différents, représentent un groupement de liaison divalent, de préférence hydrocarboné mais pouvant aussi comporter un hétéroatome tel que S, O ou N ; ils peuvent être substitués ou non, saturés ou insaturés ; ils comportent de 1 à 30, de préférence de 2 à 20 atomes de carbone, plus préférentiellement de 2 à 10 atomes de carbone.

Plus préférentiellement, Z₁ et Z₂ représentent un groupement aliphatique comportant de 2 à 20 atomes de carbone ou cycloaliphatique comportant de 3 à 20 atomes de carbone, encore plus préférentiellement un groupement aliphatique ou cycloaliphatique comportant de 3 à 10 atomes de carbone. Parmi ces groupements plus préférentiels, on citera en particulier le 1,4-diméthylène cyclohexane, de formule :

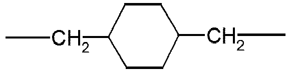

Selon un autre mode de réalisation préférentiel, « n » est égal à zéro. Dans un tel cas, le motif de formule (I) a donc la formule simplifiée qui suit :

-HN-Ar₁-NH-CH₂-CH(OH)-(CH₂)ₘ-O-Z₁-O-(CH₂)ₘ-CH(OH)-CH₂-HN-Ar₂-NH-.

En particulier, lorsque « n » est égal à zéro et « m » est égal à 1 pour chaque groupe (CH₂)ₘ, le motif de formule (I) a alors pour formule simplifiée :

-HN-Ar₁-NH-CH₂-CH(OH)-CH₂-O-Z₁-O-CH₂-CH(OH)-CH₂-HN-Ar₂-NH-.

Selon un autre mode de réalisation préférentiel, « n » est égal à 1 ou supérieur à 1 ; lorsque « n » est supérieur à 1, il est notamment compris dans un domaine de 2 à 20, plus préférentiellement de 2 à 10, en particulier de 2 à 5.

Les groupements divalents phénylènediamino (-HN-Ar₁-NH-, -HN-Ar₂-NH- et -HN-Ar₃-NH-) peuvent être identiques ou différents.

Sur chaque groupe phénylène Ar, les deux groupes amino (NH) peuvent être en position méta, ortho ou para, l'un par rapport à l'autre.

Selon un mode de réalisation préférentiel, sur chaque groupe phénylène Ar, les deux groupes amino (NH) sont en position méta (ou position -1,3) l'un par rapport à l'autre. En d'autres termes, dans un tel cas, le motif de formule générale (I) a donc pour formule développée (II) celle qui a été représentée à la figure 1 annexée.

Toujours dans le cas où les deux groupes amino (NH) sont en position méta l'un par rapport à l'autre sur chaque groupe phénylène, et que, selon un mode de réalisation plus préférentiel, « m » est égal à 1 pour chaque groupe (CH₂)ₘ et que « n » est égal à 0, Z₁ étant par exemple le 1,4-diméthylène cyclohexane, alors la formule (II) ci-dessus a pour formule plus particulière la formule développée (II-A) telle que représentée à la figure 2A annexée.

Toujours dans le cas où les deux groupes amino (NH) sont en position méta l'un par rapport à l'autre sur chaque groupe phénylène, et que, selon un autre mode de réalisation plus préférentiel, « m » est égal à 1 pour chaque groupe (CH₂), « n » est égal à 1, Z₁ et Z₂ étant par exemple le 1,4-diméthylène cyclohexane, alors la formule (II) ci-dessus a pour formule plus particulière la formule développée (II-B) telle que représentée à la figure 2B annexée.

Selon un autre mode de réalisation préférentiel de l'invention, les groupements divalents phénylènediamino (-HN-Ar₁-NH-, -HN-Ar₂-NH- et -HN-Ar₃-NH-), identiques ou différents, sont choisis parmi les composés 3,5-diméthylthio-2,4-toluènediamine, 3,5-diméthylthio-2,6-toluènediamine et leurs mélanges, répondant respectivement aux formules (III-a) et (III-b) ci-après :

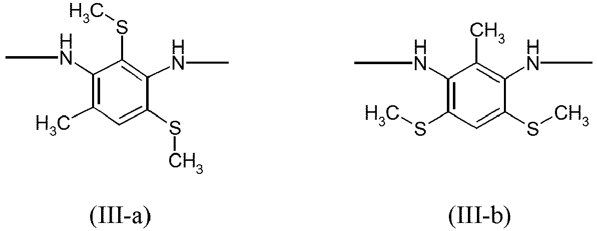

En d'autres termes, dans un tel cas, si chaque groupement phénylènediamino a par exemple pour formule particulière la formule (III-a) ci-dessus, alors les formules (II-A) et (II-B) précédentes ont alors pour formules particulières respectives les formules (II-C) et (II-D) illustrées respectivement aux figures 3A et 3B annexées.

Selon un mode de réalisation préférentiel, dans le polymère polyurée de l'invention, les unités structurelles polyamines polyaromatiques soufrées à motif de formule (I) qui ont été précédemment décrites et les unités structurelles de base à unités urée (-NH-CO-NH-) sont reliées entre elles selon un motif répondant à la formule (IV) ci-dessous :

(IV) -HN-Ar₁-NH-Y-[X]ₙ-HN-Ar₂-NH-CO-NH-Z₃-NH-CO-

dans laquelle :
- Ar₁, Ar₂, X, « n », « m » et Z₁ ont les significations données précédemment ;
- Y représente l'enchaînement :

-CH₂-CH(OH)-(CH₂)ₘ-O-Z₁-O-(CH₂)ₘ-CH(OH)-CH₂-

- et Z₃ représente un groupement de liaison divalent aliphatique, cycloaliphatique ou aromatique, le groupement aliphatique comportant de préférence 1 à 30 (plus préférentiellement 1 à 20) atomes de carbone, le groupement cycloaliphatique de préférence de 3 à 30 (plus préférentiellement 3 à 20) atomes de carbone, le groupement aromatique de 6 à 30 (plus préférentiellement 6 à 20) atomes de carbone.

Le polymère polyurée de l'invention est de préférence un polymère du type linéaire, donc résultant essentiellement de l'addition d'une polyamine ayant seulement deux fonctions amine primaire et d'un diisocyanate. Le diisocyanate utilisé peut être aromatique ou aliphatique ; il peut s'agir d'un monomère, d'un prépolymère ou quasi-prépolymère, voir même d'un polymère.

Selon un mode de réalisation préférentiel, le diisocyanate dont est issu le polymère de l'invention est choisi dans le groupe constitué par les composés aromatiques suivants : diphénylméthane diisocyanate (en abrégé « MDI »), toluène diisocyanate (« TDI »), naphtalène diisocyanate (« NDI »), 3,3'-bitoluène diisocyanate (« TODI »), paraphénylène diisocyanate (« PPDI »), leurs différents isomères, et les mélanges de ces composés et/ou isomères.

Plus préférentiellement, on utilise un MDI ou un TDI, plus préférentiellement encore un MDI.

Tous les isomères du MDI (notamment 2,2'-MDI, 2,4'-MDI, 4,4'-MDI) et leurs mélanges sont utilisables, ainsi que des MDI dits polymériques (ou « PMDI ») comportant des oligomères de formule suivante (avec p égal ou supérieur à 1) :

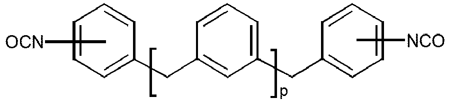

Sont également utilisables des composés diisocyanates du type aliphatiques, tels que par exemple 1,4-tétraméthylène diisocyanate, 1,6-hexane-diisocyanate (« HDI »), 1,4-bis(isocyanatométhyl)-cyclohexane, 1,3-bis(isocyanatométhyl)-cyclohexane, 1,3-bis(isocyanatométhyl)benzène, 1,4-bis(isocyanatométhyl)benzène, isophorone diisocyanate (« IPDI »), bis(4-iso-cyanatocyclohexyl)méthane diisocyanate (« H12MDI »), 4,4'-dicyclohexylméthane diisocyanate (« H13MDI »).

Selon un mode de réalisation particulièrement préférentiel, le diisocyanate utilisé est le 4,4'-MDI (4,4'-diphénylméthane diisocyanate) ayant pour formule : 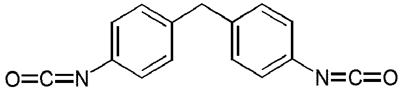 ou, si plusieurs diisocyanates sont utilisés, constitue le diisocyanate majoritaire en poids, représentant de préférence dans le dernier cas plus de 50% du poids total des composés diisocyanates.

On pourra aussi utiliser avantageusement un 4,4'-MDI bloqué caprolactame (par exemple le produit sous forme solide « Grilbond » IL-6 de la société EMS), de formule :

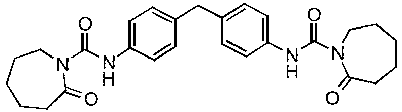

L'invention n'étant pas limitée à une polyurée du type linéaire (pour rappel, cas d'un diisocyanate), on pourra également utiliser, notamment dans le but d'augmenter la Tg du polymère de l'invention par formation d'un réseau tridimensionnel, un composé triisocyanate tel que par exemple un trimère de MDI à noyau triazine de formule ci-dessous :

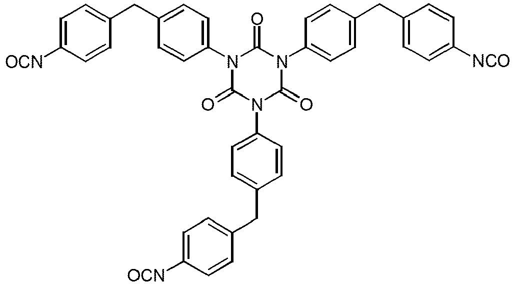

Les figures 4 à 9 annexées représentent des exemples préférentiels de polyurées conformes à l'invention ainsi que divers schémas de synthèse possibles de ces polymères.

Tout d'abord, la figure 4 annexée représente un exemple d'enchaînement d'un polymère (ci-après « Polyurée 1 ») conforme à l'invention, issu de la réaction d'un monomère MDI et d'une diamine de départ (ci-après « Prépolymère 1 ») de formule générale :

H₂N-Ar₁-NH-CH₂-CH(OH)-(CH₂)ₘ-O-Z₁-O-(CH₂)ₘ-CH(OH)-CH₂-HN-Ar₂-NH₂ ,

dans laquelle Ar₁, Ar₂ et Z₁ ont les définitions générales données précédemment pour les motifs de formule (I), et plus particulièrement les caractéristiques correspondant au motif final de formule (II-A), à savoir que les deux groupes amino (H₂N- et -NH) sont en position méta l'un par rapport à l'autre sur chaque groupe phénylène (Ar₁ et Ar₂), « m » est égal à 1 pour chaque groupe (CH₂)ₘ, « n » est égal à 0 et Z₁ est le 1,4-diméthylène cyclohexane.

Les figures 5 et 6 qui suivent illustrent des exemples de procédés utilisables pour la synthèse du Prépolymère 1 et de la Polyurée 1, respectivement, procédés qui seront décrits en détail ultérieurement.

La figure 7 annexée représente un autre exemple d'enchaînement d'un polymère (« Polyurée 2 ») conforme à l'invention, issu de la réaction d'un monomère MDI et d'une autre diamine de départ (ci-après « Prépolymère 2 ») de formule générale :

H₂N-Ar₁-NH-(CH₂)-CH(OH)-(CH₂)ₘ-O-Z₁-O-(CH₂)ₘ-CH(OH)-(CH₂)-[X]ₙ-HN-Ar₂-NH₂

avec X répondant à la formule:

-HN-Ar₃-NH-(CH₂)-CH(OH)-(CH₂)-O-Z₂-O-(CH₂)-CH(OH)-(CH₂)-

dans laquelle Ar₁, Ar₂, Ar₃, Z₁ et Z₂ ont les définitions générales données précédemment pour les motifs de formule (I), et plus particulièrement les caractéristiques correspondant au motif final de formule (II-B), à savoir que les deux groupes amino sont en position méta l'un par rapport à l'autre sur chaque groupe phénylène (Ar₁, Ar₂ et Ar₃), « m » est égal à 1 pour chaque groupe (CH₂)ₘ, « n » est égal à 1 et Z₁ et Z₂ représentent le 1,4-diméthylène cyclohexane.

Les figures 8 et 9 qui suivent illustrent des exemples de procédés utilisables pour la synthèse du Prépolymère 2 et de la Polyurée 2, respectivement, procédés qui seront décrits en détail ultérieurement.

Typiquement, le polymère de l'invention peut comporter de dix à plusieurs centaines, préférentiellement de 20 à 200 unités structurelles à motif de formule (I), en particulier d'unités structurelles telles que représentées à titre d'exemples aux figures 7 et 9. Sa température de transition vitreuse Tg, mesurée par DSC (*Differential Scanning Calorimetry*), par exemple selon ASTM D3418, est préférentiellement supérieure à 50°C, plus préférentiellement supérieure à 100°C, en particulier comprise entre 130°C et 250°C.

Comme indiqué précédemment, ce polymère de l'invention est avantageusement utilisable comme revêtement hydrophobe sur tout type de substrat, notamment en métal ou en verre, ou encore comme primaire d'adhésion sur tout type de renfort métallique, tel que par exemple un fil, un film, une plaque ou un câble en acier au carbone, laitonné ou non laitonné, destiné en particulier à renforcer une matrice de caoutchouc insaturé tel que du caoutchouc naturel.

### 5. EXEMPLES DE REALISATION DE L'INVENTION

Dans la présente demande, sauf indication expresse différente, tous les pourcentages (%) indiqués sont des pourcentages en masse.

Les essais qui suivent décrivent tout d'abord la synthèse des Prépolymères 1 et 2, aussi respectivement notés Monomères C1 et C2, à partir des Monomère A et Monomère B, puis celles des Polyurées 1 et 2 à partir des Prépolymères respectifs 1 et 2 (Monomères C1 et C2) et d'un Monomère D (MDI bloqué caprolactame). Puis sont décrites les synthèses de deux autres polymères conformes à l'invention (Polyurées 3 et 4).

Au cours de ces essais, divers tests d'adhésion sont conduits, sur différents substrats (verre ou métal) pour illustrer l'excellente performance adhésive du polymère de l'invention.

### 5.1. Essai 1 - Préparation des Prépolymères 1 et 2

Les Prépolymères 1 et 2 (aussi dénommés Monomères C1 et C2), dont les formules respectives sont données aux figures 5 et 8, ont été préparés à partir de deux Monomères A et B, selon les modes opératoires schématisés aux figures 5 et 8, comme expliqué en détail ci-après.

Le monomère A est le produit « Ethacure 300 » (fournisseur Albemarle, Belgique), disponible sous forme d'un liquide relativement visqueux, de couleur brunâtre ; il est constitué à environ 96% d'un mélange d'isomères 3,5-bis(méthylthio)-2,4-toluènediamine et de 3,5-bis(méthylthio)2,6-toluènediamine (rapport pondéral d'environ 4/1 d'après analyse chromatographique).

Le monomère B est le 1,4-cyclohexane diméthanol diglycidyl éther (en abrégé « CHXDE ») (fournisseur Aldrich, Suisse), disponible sous forme d'un grade technique (environ 61% d'un mélange de diépoxydes cis/trans). Selon les données techniques disponibles (voir par exemple document US 2011/0039982), le CHXDE est un mélange chimique complexe contenant les diépoxydes (env. 61%), du cyclohexane diméthanol résiduel (environ 2%), des mono-époxydes (environ 8%) et enfin des espèces époxydes polymériques (environ 29%). D'après l'analyse RMN, la masse équivalente d'époxyde « EEW » (*epoxide equivalent weight*) du composé ici utilisé est égale à environ 159 (EEW théorique égal à 128 dans le cas d'un composé pur).

Lors d'une première étape, les deux Monomères A et B ci-dessus ont tout d'abord été purifiés comme suit.

Le produit « Ethacure 300 » (environ 40 g) est déposé dans une colonne de chromatographie (700 g de silice) ; on utilise un mélange de solvant hexane/ dichlorométhane/ acétate d'éthyle (rapports 10:8:2) comme phase mobile. L'isomère 2,4-toluènediamine est élué en premier, suivi du deuxième isomère 2,6-toluènediamine. Dans ces conditions, les impuretés (couleur vert-bleu) ne sont pas éluées et peuvent être facilement séparées des constituants visés.

L'identification des isomères 2,4 et 2,6 est confirmée par l'analyse RMN¹H (500 MHz) dans le solvant DMSO-d6, qui donne les résultats suivants :
- 3,5-bis(méthylthio)-2,4-toluènediamine:
   *6.96 (s, 1H), 5.21-5.23 (d, 4H), 2.16 (s, 3H), 2.10 (s, 3H), 1.97 (s, 3H).*
- 3,5-bis(méthylthio)-2,6-toluènediamine:
   *7.22 (s, 1H), 5.09 (s, 4H), 2.15 (s, 6H), 1.92 (s, 3H).*

Le produit « CHXDE » est quant à lui isolé par distillation sous vide selon les conditions d'expérimentation décrites dans l'exemple 3 du document précité US 2011/0039982. Les structures cis/trans du diépoxyde sont confirmées par analyse RMN ¹H dans DMSO-d6.

Après ces étapes de purification, les Prépolymères 1 et 2 ont été préparés comme schématisé respectivement aux figures 5 et 8, selon les informations plus détaillées qui suivent.

Dans un ballon à trois cols de 25 ml préalablement séché (100°C sous vide), muni d'un barreau magnétique, d'un réfrigérant pourvu d'une circulation pour l'azote, on place 180 mg de Monomère B (0,702 mmol) puis 3 ml de tétrahydrofurane (THF). Puis, sous agitation, on ajoute 150 mg de Monomère A (soit 0,702 mmol). Le mélange obtenu est chauffé à reflux à 70°C durant une heure, puis le THF est éliminé par distillation. Le liquide transparent ainsi obtenu (Prépolymère 1 ou Monomère C1) a été analysé par DSC de -80°C à 200°C : la Tg mesurée (second passage) est égale à environ -40°C.

Le Prépolymère 2 (Monomère C2) a été préparé de manière similaire, à partir des deux mêmes composés (150 mg de Monomère A et 180 mg de Monomère B), le mélange étant chauffé à 170°C durant une heure et demie (sans solvant THF) dans un ballon de 25 ml muni d'un réfrigérant, la réaction s'effectuant à l'air. Le produit de réaction ainsi obtenu (Prépolymère 2 ou Monomère C2) présentait une Tg d'environ + 31°C (second passage de DSC).

### 5.2. Essai 2 - Synthèse des Polvurées 1 et 2

Puis, dans une étape finale telle que schématisée respectivement aux figures 6 et 9, les Polyurées 1 et 2 ont été synthétisées par réaction des Prépolymères 1 et 2 avec le Monomère D (MDI bloqué caprolactame), comme décrit ci-après.

Dans un récipient en verre, on place 330,5 mg de Monomère C1 (Prépolymère 1) puis 336 mg de Monomère D (« Grilbond IL6 ») dans 8 ml de solvant DTP (1,3-diméthyl-3,4,5,6-tétrahydro-2(*1H*-pyrimidinone ; CAS 7226-23-5). La suspension est placée quelques secondes sous vibration mécanique (dispositif vortex) jusqu'à la dissolution complète du Monomère D. Puis, on dépose de manière uniforme, 1,5 ml de cette solution sur une plaque en verre (10x10 cm) ; la plaque de verre est ensuite placée dans une étuve (ventilation à l'air) à 170°C durant 15 min, étape suivie de 15 min à 190°C sous vide afin d'éliminer les traces de solvant.

La couche mince de Polyurée 1 ainsi obtenue a révélé une excellente adhésion au verre (impossibilité de séparer par traction le polymère du verre). Cette Polyurée P1, analysée par DSC, présentait une Tg d'environ 190°C (second passage).

Pour la synthèse de la Polyurée 2, le Prépolymère 2 (Monomère C2, 0,702 mmol) a été dissous partiellement dans 12 ml de DTP chauffé dans un premier temps pendant 2 min à environ 110°C ; puis, en chauffant le milieu à 170°C durant 30 min, on obtient un produit bien soluble. On a ajouté ensuite 336 mg de Monomère D (0,702 mmol) et mélangé le tout dans un agitateur (dispositif vortex) jusqu'à dissolution complète du Monomère D.

Puis on a déposé, de manière uniforme, 4 ml de la solution ainsi obtenue sur une plaque en acier zingué (surface 100 cm²); le tout a été placé dans une étuve (ventilation à l'air) à 170°C durant 15 min. Le film transparent jaune a été ensuite traité sous vide à 190°C pendant 15 min afin d'éliminer les traces de solvant.

La Polyurée 2 finale ainsi obtenue, sous la forme d'un film fin, a révélé une excellente adhésion à la plaque en acier (impossibilité de séparer par traction le polymère du métal). Cette Polyurée 2, analysée par DSC entre -80°C et +200°C (selon une rampe de 10°C/min) présentait une Tg d'environ 160°C (second passage).

### 5.3. Essai 3 - Tests d'adhésion dans un composite métal / caoutchouc

Dans un autre essai, on a préparé une Polyurée 1 telle que décrite précédemment et illustrée à la figure 4, cette fois par réaction simultanée des Monomères A (150,5 mg), B (180 mg) et D (336 mg), en dissolvant les 3 composés dans 8 ml de DPT, sans utiliser de solvant THF et sans passer par l'étape de Prépolymère 1.

Une fois les composés dissous dans le DPT, on a déposé de manière uniforme 0,1 ml de la solution sur un feuillard en acier laitonné (acier avec taux de carbone égal à environ 1%) de dimensions 10 cm x 0,5 cm x 0,2 mm ; puis le tout a été placé à l'étuve à 175°C (ventilation à l'air) durant 15 min, puis 15 min supplémentaires à 175°C sous vide.

Le feuillard a été ensuite refroidi à température ambiante puis on a déposé, sur la fine couche de film polyurée ainsi formée, 0,75 ml d'une solution de caoutchouc naturel époxydé (ENR, avec un taux d'époxydation de 25% ; fournisseur Aldrich) et de diisocyanate (MDI liquide « Suprasec » 2020 de Huntsman) qui a été préparée comme suit : 150 mg de ENR ont été dissous préalablement dans 5 ml de toluène, pendant 30 min à 23°C sous agitation (barreau magnétique) ; on a ensuite ajouté, sous courant d'azote, 100 mg de diisocyanate. Le feuillard ainsi préparé a été finalement traité à l'étuve à 100°C sous vide, pendant 15 min.

Le feuillard en acier laitonné ainsi revêtu du film de Polyurée 1 elle-même recouverte de la fine couche de ENR a été ensuite placé dans une composition de caoutchouc conventionnelle pour armature de ceinture de pneu tourisme, à base de caoutchouc naturel, de noir de carbone et silice à titre de charge, et d'un système de vulcanisation (soufre et accélérateur sulfénamide) ; cette composition étant dépourvue de sel de cobalt.

Puis l'éprouvette de composite métal / caoutchouc ainsi préparée a été placée sous presse et le tout cuit (vulcanisé) à 165°C pendant 30 min sous une pression de 20 bar.

Après vulcanisation du caoutchouc, on a obtenu un excellent collage entre la matrice de caoutchouc et le feuillard de métal malgré l'absence de sel de cobalt dans la matrice de caoutchouc : lors de tests de pelage conduits à la fois à température ambiante (23°C) et à haute température (100°C), on a constaté en effet que la rupture se produisait systématiquement dans la matrice de caoutchouc elle-même et non à l'interphase entre métal et caoutchouc.

D'autres essais de collage, conduits cette fois sur une plaque en acier zinguée par galvanisation, avec une épaisseur de la couche de polyurée selon l'invention variant de 3 à 10 µm, ont révélé eux aussi une excellente adhésion au caoutchouc (rupture systématique dans la matrice de caoutchouc).

### 5.4. Essai 4 - Synthèse de la Polyurée 3

Lors d'un essai supplémentaire, on a synthétisé un nouveau polymère conforme à l'invention (Polyurée 3) par réaction en solution (solvant DTP) du Monomère C (Prépolymère 1, produit d'addition des monomères A et B tous deux utilisés dans cet essai sous forme purifiée) avec du MDI solide (ici sous forme non bloqué, Sigma Aldrich), selon le mode opératoire qui suit.

Dans un appareillage sec équipé d'un ballon à trois cols de 250 ml, d'un réfrigérant, d'un barreau magnétique et d'une circulation d'azote, sont ajoutés 1,5 g de Monomère B purifié (4^{ème} fraction) puis 20 ml de solvant DTP. Dans un même temps, on a préparé une première solution de 1,5 g de 3,5-bis(méthylthio)-2,4-toluènediamine (isolée du produit « Ethacure 300 ») dans 30 ml de DTP qui a été placée dans une ampoule à addition et une seconde solution de 1,75 g de diphénylméthane diisocyanate (MDI) dissout dans 30 ml de DTP et placée dans une seconde ampoule à addition, le tout sous azote.

Sous agitation et à 100°C (température intérieure du ballon), on a ajouté goutte à goutte les solutions d'amine aromatique et de MDI. La réaction de polymérisation a été poursuivie durant 4 h à 100°C, suivie d'une étape de 1 h à 160°C. La solution transparente jaune (1,5 ml) ainsi obtenue a été déposée sur une plaque en verre (10 cm x 10 cm) de manière uniforme puis placée à l'étuve à 170°C (ventilation à air) durant 15 min, étape suivie d'un traitement de 15 min à 190°C sous vide afin d'éliminer toute trace de solvant.

La Polyurée 3 finale ainsi obtenue, sous la forme d'un film fin, a révélé une excellente adhésion d'une part au verre (impossibilité de séparer par traction le polymère du verre), d'autre part dans une éprouvette de composite métal (plaque en acier laitonné) / caoutchouc (rupture systématique dans la matrice de caoutchouc) telle que décrite précédemment. Cette Polyurée 3, analysée par DSC entre -80°C et +200°C (selon une rampe de 10°C/min) présentait une Tg d'environ 150°C (second passage).

Par ailleurs, du polymère (Polyurée 3) a été précipité en versant, sous agitation, 20 ml de la solution de polymère jaune précédente dans un mélange de solvant (800 ml) hexane/2-propanol (rapport 1/1), puis en refroidissant le tout entre 0 et +5°C durant 1 h. Le précipité blanc sous forme de poudre a été ensuite isolé par filtration puis séché à l'étuve à 60°C sous vide durant 2 h. On a ajouté au solide blanc 5 ml d'acétone et les résidus solubles ont été ainsi extraits du polymère à 40°C pendant 15 min. Cette opération a été répétée deux fois. La Polyurée 3 ainsi purifiée ne montrait plus de résidu de 3,5-bis(méthylthio)-2,4-toluène diamine.

Puis, dans le but d'augmenter sa Tg, la Polyurée 3 ainsi purifiée (330 mg) et du diisocyanate (336 mg de « Grilbond » IL6 en poudre) ont été mélangés et complètement dissous dans 8 ml de DTP. La solution transparente jaune (1,5 ml) ainsi obtenue a été déposée sur une plaque en verre (10 x 10 cm) de manière uniforme puis placée à l'étuve à 170°C (ventilation à air) durant 15 min, étape suivie de 15 min à 190°C sous vide afin d'éliminer les traces de solvant. Le film fin ainsi obtenu présentait une excellente adhésion au verre (impossibilité de séparer par traction le polymère du verre). L'analyse DSC a révélé une Tg égale à environ 188°C (au 3^{ème} passage).

### 5.5. Essai 5 - Synthèse de la Polyurée 4

Enfin, au cours d'un nouvel et dernier essai, dans le but d'augmenter à la fois la Tg du polymère de l'invention, sa stabilité thermique et chimique, on a synthétisé une nouvelle polyurée (Polyurée 4), cette fois par réaction directe entre le Monomère A (1 équivalent), le Monomère B (1 équivalent) et le Monomère D (3 équivalents de MDI) en présence de N,N'-diméthylbenzylamine (DBA) comme catalyseur de trimérisation de MDI, ceci selon le mode opératoire détaillé qui suit.

Dans un appareillage sec équipé d'un ballon de 250 ml, d'un barreau magnétique et d'un courant d'azote, ont été ajoutés 2,56 g de monomère B purifié (4^{ème} fraction), 16 µl de DBA (soit environ 0,25 %) et 3,75 g de MDI liquide (« Suprasec 2020 » de Huntsman). On a ajouté 40 ml de toluène et la solution a été agitée à température ambiante pendant 5 min (pas de réaction apparente observée). 10 % en volume de la solution ainsi obtenue a été mélangé rapidement avec 214,3 mg de 3,5-bis(méthylthio)-2,4-toluènediamine purifiée ; ce mélange liquide a été déposé (1,5 ml) sur une plaque en verre préchauffée à l'étuve à 170°C, puis laissé sous vide pendant 15 minutes à 170°C. Un film transparent s'est formé rapidement sur la plaque en verre. Le traitement thermique a été poursuivi durant 5 min à 250°C (ventilation à l'air), il n'y avait pas de coloration jaune du film.

La polyurée ainsi modifiée (Polyurée 4), contenant des motifs additionnels polyoxazolidine, a été ensuite analysée par DSC entre 80°C et 330°C : elle présentait une Tg d'environ 233°C au 2^{ème} passage et d'environ 244°C au 3^{ème} passage DSC. Elle s'est révélé stable jusqu'à 280°C, une décomposition partielle étant observable au-delà de 300°C (endothermie).

En conclusion, les essais précédents démontrent que le polymère polyurée de l'invention, caractérisé notamment par une température de transition vitreuse élevée, une haute stabilité thermique et chimique, présente une excellente adhésion au verre ou au métal.

Utilisé notamment comme primaire d'adhésion sur métal dans des composites métal / caoutchouc, ce polymère permet très avantageusement de coller le métal aux matrices de caoutchouc en utilisant de simples colles textiles telles que des colles « RFL » (résorcinol-formaldéhyde-latex) ou autres compositions adhésives équivalentes, ou encore directement (c'est-à-dire sans emploi de telles colles) à ces matrices de caoutchouc lorsque ces dernières contiennent par exemple des élastomères insaturés fonctionnalisés appropriés tels que des élastomères époxydés.

Ainsi peuvent être supprimés notamment les sels de cobalt (ou autres sels métalliques) dans les compositions de caoutchouc destinées à être reliées à des renforts métalliques laitonnés.

## Revendications

1. Polyurée comportant au moins des unités de base urée de formule -NH-CO-NH- et des unités additionnelles, **caractérisée en ce que** ces unités additionnelles sont des unités du type polyamines polyaromatiques soufrées comportant au moins un motif répondant à la formule :
(I) -HN-Ar₁-NH-CH₂-CH(OH)-(CH₂)ₘ-O-Z₁-O-(CH₂)ₘ-CH(OH)-CH₂-[X]ₙ-HN-Ar₂-NH-
dans laquelle X représente l'enchaînement :
-HN-Ar₃NH-CH₂-CH(OH)-(CH₂)ₘO-Z₂-O-(CH₂)ₘ-CH(OH)-CH₂-
et dans laquelle:
- le symbole « n » représente un nombre entier égal à zéro ou différent de zéro ;
- les symboles « m », identiques ou différents, représentent un nombre entier compris dans un domaine de 1 à 10 ;
- les symboles Z₁ et Z₂, identiques ou différents, représentent un groupement de liaison divalent comportant de 1 à 30 atomes de carbone, de préférence un groupement aliphatique comportant 2 à 20 atomes de carbone ou cycloaliphatique comportant 3 à 20 atomes de carbone ;
- Ar₁, Ar₂ et Ar₃, identiques ou différents, représentent un groupe phénylène, un au moins de ces groupes phénylène étant porteur de un, deux, trois ou quatre groupements de formule -Sₓ-R dans laquelle « x » est un entier de 1 à 8 et R représente l'hydrogène ou un groupe hydrocarboné pouvant comporter un hétéroatome, comportant de 1 à 10 atomes de carbone, de préférence un alkyle ayant de préférence 1 à 5 atomes de carbone.

2. Polyurée selon la revendication 1, dans laquelle Z₁ et Z₂ représentent le 1,4-diméthylène cyclohexane.

3. Polyurée selon les revendications 1 ou 2, dans laquelle chacun des groupes Ar₁, Ar₂ et Ar₃, est porteur de un, deux, trois ou quatre groupements de formule -Sₓ-R, de préférence de deux groupements -Sₓ-R, ces deux groupements étant de préférence en position méta l'un par rapport à l'autre sur le noyau phénylène.

4. Polyurée selon l'une quelconque des revendications 1 à 3, dans laquelle « x » est compris dans un domaine de 1 à 4, de préférence est égal à 1 ou 2.

5. Polyurée selon l'une quelconque des revendications 1 à 4, dans laquelle les enchaînements phénylènediamino -HN-Ar₁-NH- , -HN-Ar₂-NH- et -HN-Ar₃-NH-, identiques ou différents, répondent à l'une des formules (III-a) ou (III-b) ci-dessous :

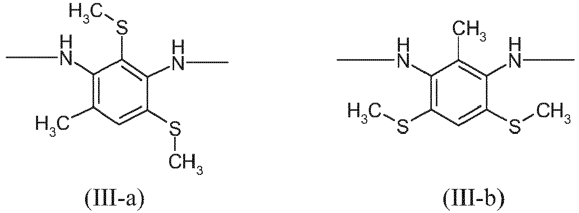

6. Polyurée selon l'une quelconque des revendications 1 à 5, dans laquelle les unités polyamines polyaromatiques soufrées à motif de formule (I) et les unités structurelles de base à unités urée -NH-CO-NH- sont reliées entre elles selon un motif répondant à la formule :
(IV) -HN-Ar₁-NH-Y[X]ₙHN-Ar₂-NH-CONH-Z₃-NH-CO-
dans laquelle :
- Ar₁, Ar₂, X, « n », « m » et Z₁ ont les significations données précédemment ;
- Y représente l'enchaînement :
-CH₂-CH(OH)-(CH₂)ₘ-O-Z₁-O-(CH(OH)-CH₂-
- et Z₃ représente un groupement de liaison divalent aliphatique, cycloaliphatique ou aromatique, le groupement aliphatique comportant de préférence 1 à 30 atomes de carbone, le groupement cycloaliphatique de préférence 3 à 30 atomes de carbone, le groupement aromatique de préférence 6 à 30 atomes de carbone.

7. Utilisation d'une polyurée selon l'une quelconque des revendications 1 à 6, comme primaire d'adhésion pour le collage d'un substrat à un caoutchouc insaturé, le substrat étant de préférence un substrat dont au moins la surface comporte du verre ou du métal.

8. Utilisation d'une polyurée selon l'une quelconque des revendications 1 à 6, comme revêtement de protection anticorrosion d'un substrat dont au moins la surface est au moins en partie métallique.

9. Substrat revêtu, au moins en partie, d'une polyurée selon l'une quelconque des revendications 1 à 6, ledit substrat étant de préférence en verre ou en métal.

10. Renfort métallique sous la forme d'un fil, câble, film ou d'une plaque dont au moins une partie de la surface est en acier laitonné, **caractérisé en ce que** ledit acier laitonné est revêtu d'une polyurée selon l'une quelconque des revendications 1 à 6.

## Patentansprüche

1. Polyharnstoff, umfassend mindestens Harnstoff-Grundeinheiten der Formel -NH-CO-NH- und zusätzliche Einheiten, **dadurch gekennzeichnet, dass** es sich bei den zusätzlichen Einheiten um Einheiten des Typs schwefelhaltiger polyaromatischer Polyamine handelt, die mindestens ein Motiv der folgenden Formel enthalten:
(I) -HN-Ar₁-NH-CH₂CH(OH)(CH₂)ₘ-O-Z₁-O-(CH₂)ₘ-CH(OH)CH₂[X]ₙ-HN-Ar₂-NH-
worin X die folgende Gruppierung darstellt:
-HN-Ar₃-NH-CH₂-CH(OH)-(CH₂)ₘ-O-Z₂-O-(CH₂)ₘ-CH(OH)-CH₂-
und worin:
- das Symbol "n" eine ganze Zahl gleich Null oder verschieden von Null darstellt;
- die Symbole "m", die gleich oder verschieden sind, eine ganze Zahl in einem Bereich von 1 bis 10 darstellen;
- die Symbole Z₁ und Z₂, die gleich oder verschieden sind, eine zweiwertige Verbindungsgruppe mit 1 bis 30 Kohlenstoffatomen, vorzugsweise eine aliphatische Gruppe mit 2 bis 20 Kohlenstoffatomen oder eine cycloaliphatische Gruppe mit 3 bis 20 Kohlenstoffatomen darstellen;
- Ar₁, Ar₂ und Ar₃, die gleich oder verschieden sind, eine Phenylengruppe darstellen, wobei mindestens eine dieser Phenylengruppen eine, zwei, drei oder vier Gruppen der Formel -Sₓ-R trägt, worin "x" eine ganze Zahl von 1 bis 8 ist und R Wasserstoff oder eine Kohlenwasserstoffgruppe, die ein Heteroatom tragen kann, mit 1 bis 10 Kohlenstoffatomen, vorzugsweise ein Alkyl mit 1 bis 5 Kohlenstoffatomen darstellt.

2. Polyharnstoff nach Anspruch 1, wobei Z₁ und Z₂ 1,4-Dimethylencyclohexan darstellen.

3. Polyharnstoff nach den Ansprüchen 1 oder 2, wobei jede der Gruppen Ar₁, Ar₂ und Ar₃ eine, zwei, drei oder vier Gruppen der Formel -Sₓ-R, vorzugsweise zwei Gruppen der Formel -Sₓ-R trägt, wobei diese beiden Gruppen vorzugsweise am Phenylenkern in meta-Stellung zueinander stehen.

4. Polyharnstoff nach einem der Ansprüche 1 bis 3, wobei "x" in einem Bereich von 1 bis 4 liegt, vorzugsweise gleich 1 oder 2 ist.

5. Polyharnstoff nach einem der Ansprüche 1 bis 4, wobei die Phenylendiamino-Gruppierungen -HN-Ar₁-NH-, -HN-Ar₂-NH- und -HN-Ar₃-NH-, die gleich oder verschieden sind, einer der folgenden Formeln (III-a) oder (III-b') entsprechen:

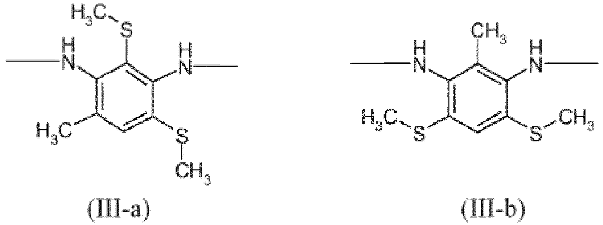

6. Polyharnstoff nach einem der Ansprüche 1 bis 5, wobei die schwefelhaltigen polyaromatischen Polyamineinheiten mit dem Motiv der Formel (I) und die strukturellen Grundeinheiten mit Harnstoffeinheiten -NH-CO-NH- untereinander durch ein Motiv der Formel:
(IV) -HN-Ar₁-NH-Y-[X]ₙ-HN-Ar₂-NH-CO-NH-Z₃-NH-CO-
verbunden sind, worin:
- Ar₁, Ar₂, X, "n", "m" und Z₁ die vorstehend angegebenen Bedeutungen haben;
- Y für die folgende Gruppierung steht:
-CH₂-CH(OH)-(CH₂)ₘ-O-Z₁-O-(CH₂)ₘ-CH(OH)-CH₂-
- und Z₃ eine zweiwertige aliphatische, cycloaliphatische oder aromatische Verbindungsgruppe darstellt, wobei die aliphatische Gruppe vorzugsweise 1 bis 30 Kohlenstoffatome umfasst, die cycloaliphatische Gruppe vorzugsweise 3 bis 30 Kohlenstoffatome umfasst und die aromatische Gruppe vorzugsweise 6 bis 30 Kohlenstoffatome umfasst.

7. Verwendung eines Polyharnstoffs nach einem der Ansprüche 1 bis 6 als Haftprimer zum Verkleben eines Substrats mit einem ungesättigten Kautschuk, wobei es sich bei dem Substrat vorzugsweise um ein Substrat handelt, bei dem mindestens eine Oberfläche Glas oder Metall umfasst.

8. Verwendung eines Polyharnstoffs nach einem der Ansprüche 1 bis 6 als Antikorrosionsschutzschicht für ein Substrat, bei dem mindestens die Oberfläche zumindest zum Teil metallisch ist.

9. Substrat, das zumindest zum Teil mit einem Polyharnstoff nach einem der Ansprüche 1 bis 6 beschichtet ist, wobei das Substrat vorzugsweise aus Glas oder Metall ist.

10. Metallverstärkung in Form eines Drahts, einer Seils, einer Folie oder einer Platte, bei der zumindest ein Teil der Oberfläche aus vermessingtem Stahl besteht, **dadurch gekennzeichnet, dass** der vermessingte Stahl mit einem Polyharnstoff nach einem der Ansprüche 1 bis 6 beschichtet ist.

## Claims

1. Polyurea comprising at least urea base units of formula -NH-CO-NH- and additional units, **characterized in that** these additional units are units of the sulphur-comprising polyaromatic polyamine type comprising at least one sub-unit corresponding to the formula:
(I) -HN-Ar₁-NH-CH₂-CH(OH)-(CH₂)ₘ-O-Z₁-O-(CH₂)ₘ-CH(OH)-CH₂-[X]ₙ-HN-Ar₂-NH-
in which X represents the string:
-HN-Ar₃-NH-CH₂-CH(OH)-(CH₂)ₘ-O-Z₂-O-(CH₂)ₘ-CH(OH)-CH₂-
and in which:
- the "n" symbol represents an integer equal to zero or different from zero;
- the "m" symbols, which are identical or different, represent an integer within a range from 1 to 10;
- the Z₁ and Z₂ symbols, which are identical or different, represent a divalent bonding group comprising from 1 to 30 carbon atoms;
- Ar₁, Ar₂ and Ar₃, which are identical or different, represent a phenylene group, one at least of these phenylene groups bearing one, two, three or four groups of formula -Sₓ-R in which "x" is an integer from 1 to 8 and R represents hydrogen or a hydrocarbon group which can comprise a heteroatom and which comprises from 1 to 10 carbon atoms.

2. Polyurea according to Claim 1, in which Z₁ and Z₂ represent cyclohexane-1,4-dimethylene.

3. Polyurea according to Claims 1 or 2, in which each of the Ar₁, Ar₂ and Ar₃ groups bears one, two, three or four groups of formula -Sₓ-R, preferably of two groups of formula - Sₓ-R, these two groups preferably being in the meta position with respect to one another on the phenylene nucleus.

4. Polyurea according to any one of Claims 1 to 3, in which "x" is within a range from 1 to 4, preferably equal to 1 or 2.

5. Polyurea according to any one of Claims 1 to 4, in which the phenylenediamino -HN-Ar₁-NH-, -HN-Ar₂-NH- and -HN-Ar₃-NH- strings, which are identical or different, correspond to either of the formulae (III-a) and (III-b):

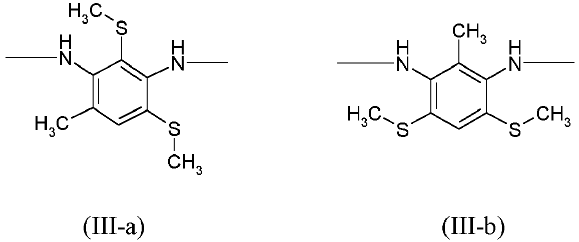

6. Polyurea according to any one of Claims 1 to 5, in which the sulphur-comprising polyaromatic polyamine units having a sub-unit of formula (I) and the base structural units having urea -NH-CO-NH- units are connected to one another according to a sub-unit corresponding to the formula:
(IV) -HN-Ar₁-NH-Y-[X]ₙ-HN-Ar₂-NH-CO-NH-Z₃-NH-CO-
in which:
- Ar₁, Ar₂, X, "n", "m" and Z₁ have the meanings given above;
- Y represents the string:
-CH₂-CH(OH)-(CH₂)ₘ-O-Z₁-O-(CH₂)ₘ-CH(OH)-CH₂-
- and Z₃ represents an aliphatic, cycloaliphatic or aromatic divalent bonding group, the aliphatic group preferably comprising from 1 to 30 carbon atoms, the cycloaliphatic group preferably comprising from 3 to 30 carbon atoms and the aromatic group preferably comprising from 6 to 30 carbon atoms.

7. Use of a polyurea according to any one of Claims 1 to 6 as adhesion primer for the adhesive bonding of a substrate to an unsaturated rubber, the substrate is a substrate having at least the surface comprising glass or metal.

8. Use of a polyurea according to any one of Claims 1 to 6, as corrosion-resistant protective coating for a substrate having at least the surface being at least partially metallic.

9. Substrate coated, at least in part, with a polyurea according to any one of Claims 1 to 6, the substrate is preferably made of glass or metal.

10. Metal reinforcer in the form of a thread, cord, film or plate, at least a portion of the surface of which is made of brass-coated steel, **characterized in that** the said brass-coated steel is coated with a polyurea according to any one of Claims 1 to 6.
